# EUROPEAN PATENT APPLICATION

(11) **EP 2 226 719 A1**
(43) Date of publication of application: **08.09.2010**
(21) Application number: 10305223.9
(22) Date of filing: 04.03.2010
(51) Int. Cl.: G06F 9/44, G06F 3/048, G06F 17/30

(54) **User interface to render a user profile**

(30) Priority: 05.03.2009 US 157584 P
(71) Applicant: France Telecom, 75015 Paris (FR)
(72) Inventor: De Bel Air, Virginie, San Francisco, CA 94116 (US); Sivasubbramanian, Sundarraman, Foster City, CA 94404 (US)

(57) **Abstract**

A method for updating a user profile characterizing a user experience with at least one application software, the user profile being described through a plurality of tags of different weights based on the popularity of the tag in said user experience, said method comprising the acts of rendering a Graphical User Interface (GUI) of the user profile through a tag cloud using a virtual representation for each tag, the size of each virtual representation being linked to the corresponding weight of the tag, receiving at least a first entry for changing the size of one selected virtual representation, updating in the user profile the weight of the tag corresponding to the selected virtual representation based on the first entry.

## Description

### FIELD OF THE PRESENT SYSTEM:

The present invention generally relates to the profiling of users interacting with one or more application software, and more specifically to the profiling using tag clouds.

### BACKGROUND OF THE PRESENT SYSTEM:

Today there is an explosion of information accessible through the Internet. Identifying specific information can sometimes become a real burden for a user.

A plurality of search engines is currently available to help the user find and select hyperlinks to web pages with information relevant to him. Generally, a user will provide a search engine with a number of search terms that expresses his interests. The search engine will then return a list of links more or less relevant to the user's search query. The list of links, also called hits, is the result of the matching of the search terms with pre-stored web pages (collected e.g. through a web crawler).

Another approach to help a user identify relevant content is through pushing content relevant to his profile. A profile can be seen as a collection of personal data associated to a given user. Based on their profile, different platforms are available today to collect content relevant to users. A profile can be generated by the user himself, or based on a user interaction or experience with one or more application software. For instance, the web content consumed by a user through a web browser provides raw data (accessed web pages addresses, pages content, metadata from the pages, etc.) that when analyzed through different profiling techniques can help define the user profile.

One interesting way to analyze the user experience is through the use of tags. By tag, one may understand a keyword that characterizes each item of the consumed web content. Several tags may be available for a same item. The tags may correspond to words taken out of the content itself or the metadata of an item. The keyword may also be additional information added by a user (often referred to a self tagging), i.e. that the link between the content item and the tag may be user based and does not necessarily stem from the item itself or its metadata. Tags may generally be extracted through tag extractors or tag engines, using for instance disambiguation techniques to extract useful keywords from the raw data.

The profiling may of course not be limited to web experience, and may be multi-sources, like media, pictures, mobile experience (services called, etc.). The various types of user experiences are beyond the scope of the present invention.

Document US2009006442A1 describes a computer implemented method for self tagging based on one user activity. A browser utility is provided to facilitate the creation of a user profile that is human understandable. As can be seen from the different embodiments illustrated in this document, a tag cloud GUI (graphical user interface) may be rendered on a display device to represent a user profile. If the user gets from the cloud a good idea of what tags describe his profile, he has no idea how significant they are when compared to one another. Furthermore a limited interactivity is proposed with such a GUI when for instance the user does not agree with the tag selection in the cloud GUI.

Furthermore with the arrival of smart phones equipped with touch screens or panels, the limited interactivity does not make this cloud representation suitable to touch interfaces.

There is still a need today for a system, method, user interface and device that provide a flexible and interactive tag cloud representation of a user profile.

### SUMMARY OF THE PRESENT SYSTEM:

It is an object of the present system to overcome disadvantages and/or make improvements in the prior art.

The present system includes a system, method, device and interface for updating a user profile characterizing a user experience with at least one application software, the user profile being described through a plurality of tags of different weights based on the popularity of the tag in said user experience. The present method comprises the acts of:
rendering a Graphical User Interface (GUI) of the user profile through a tag cloud using a virtual representation for each tag, the size of which being linked to the corresponding weight of the tag,
receiving at least a first entry for changing the size of one selected virtual representation,
updating in the user profile the weight of the tag corresponding to the selected virtual representation based on the first entry.

Thanks to the present method, the user can have a direct visualization of his profile through a tag cloud, and can control, through user entries on a user device for instance, the contribution of any of the displayed tags. In an additional embodiment of the present system, the GUI of the user profile is updated for each user entry, the GUI comprising an updated size for the selected virtual tag. The user entries may be provided through control buttons that are provided with an update of the GUI for each selected tag, causing the size of the selected tag to be updated. The update of the size gives the user a direct sense of control over his user profile.

The present system also includes a computer program stored on a computer readable memory medium, the computer program configured for generating an updating of a user profile characterizing a user experience with at least one application software, the user profile being described through a plurality of tags of different weights based on the popularity of the tag in said user experience, the computer program comprising:
a program portion configured to render a Graphical User Interface (GUI) of the user profile through a tag cloud using a virtual representation for each tag, the size of which being linked to the corresponding weight of the tag,
a program portion configured to receive at least a first entry for changing the size of one selected virtual representation,
a program portion configured to update in the user profile the weight of the tag corresponding to the selected virtual representation based on the first entry.

In another embodiment of the present system, an electronic device for updating a user profile characterizing a user experience with at least one application software, the user profile being described through a plurality of tags of different weights based on the popularity of the tag in said user experience, said electronic device being configured to:
render a Graphical User Interface (GUI) of the user profile through a tag cloud using a virtual representation for each tag, the size of which being linked to the corresponding weight of the tag,
receive at least a first entry for changing the size of one selected virtual representation,
update in the user profile the weight of the tag corresponding to the selected virtual representation based on the first entry.

In another embodiment of the present system, a profiling application for updating a user profile characterizing a user experience with at least one application software, the user profile being described through a plurality of tags of different weights based on the popularity of the tag in said user experience, said profiling application comprising:
a portion configured to render a Graphical User Interface (GUI) of the user profile through a tag cloud using a virtual representation for each tag, the size of which being linked to the corresponding weight of the tag,
a portion configured to receive at least a first entry for changing the size of one selected virtual representation,
a portion configured to update in the user profile the weight of the tag corresponding to the selected virtual representation based on the first entry.

### BRIEF DESCRIPTION OF THE DRAWINGS:

The invention is explained in further detail, and by way of example, with reference to the accompanying drawings wherein:
FIG. 1 shows a user device in accordance with an embodiment of the present system;
FIG. 2 shows a system in accordance with an embodiment of the present system;
FIG. 3 shows illustrative process flow diagrams in accordance with an embodiment of the present system;
FIGs. 4A, and 4B show a graphical user interface (GUI) in accordance with an embodiment of the present system;
FIGs. 5A and 5B show illustrative process flow diagrams in accordance with another embodiment of the present system; and,
FIG. 6 shows a system in accordance with another embodiment of the present system.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

For purposes of simplifying a description of the present system, the terms "operatively coupled", "coupled" and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof. For example, an operative coupling may include a wired and/or wireless coupling to enable communication between a service platform, such as the profiling platform in accordance with an embodiment of the present system, and one or more user devices. An operative coupling may also relate to an interaction between program portions and thereby may not describe a physical connection so much as an interaction based coupling.

The term rendering and formatives thereof as utilized herein refer to providing content, such as digital media or a graphical user interface (GUI), such that it may be perceived by at least one user sense, such as a sense of sight and/or a sense of hearing. For example, the present system may render a user interface on a display device so that it may be seen and interacted with by a user. The term rendering may also comprise all the actions required to generate a GUI prior to the display, like e.g. a tag cloud generated on a server side for a browser application on a user device.

The system, device(s), method, user interface, etc., described herein address problems in prior art systems. In accordance with an embodiment of the present system, a system provides a GUI for rendering a user profile through a tag cloud on a display panel or device. The GUI allows an easy interaction with the user profile represented through a cloud of tags of different sizes, a tag size characterizing the popularity of this tag in the user profile. By changing a tag size through user provided inputs (or entries), a user will directly modify his user profile based on the new size of the tag.

A graphical user interface (GUI) may be provided in accordance with an embodiment of the present system by a profiling application running on a processor, such as part of a computer system of a user device and/or as provided by a network connected device, such as a web-based server hosting the profiling application. The provided visual environment may be displayed by the processor on a display device of the user device. ,The user may interact with the visual environment by providing a number of inputs to change the size of a selected tag.

A GUI is a type of user interface which allows a user to interact with electronic devices such as computers, hand-held devices, household appliances, office equipment and the likes. GUIs are typically used to render visual and textual images which describe various visual metaphors of an operating system, an application, etc., and implemented on a processor/computer including rendering on a display device. Furthermore, GUIs can represent programs, files and operational functions with graphical images, objects, or virtual representations. The graphical images can include windows, fields, dialog boxes, menus, icons, buttons, cursors, scroll bars, maps, etc. Such images can be arranged in predefined layouts, or can be created dynamically (by the device itself or by a web-based server) to serve the specific actions being taken by a user. In general, the user can select and/or activate various graphical images in order to initiate functions and tasks associated therewith. By way of example, a user can select a button that opens, closes, minimizes, or maximizes a window, or an icon that launches a particular program. By way of another example, the GUI may present a typical user interface including a windowing environment and as such, may include menu items, pull-down menu items, pop-up windows, etc., that are typical of those provided in a windowing environment, such as may be represented within a Windows™ Operating System GUI as provided by Microsoft Corporation and/or an OS X™ Operating System GUI, such as provided on an iPhone™, MacBook™, iMac™, etc., as provided by Apple, Inc., and/or another operating system.

In the description hereafter, a GUI displaying a tag cloud will be referred to as a tag cloud GUI or in short tag cloud interface. As described hereafter, the present method may be implemented through a profiling application either web-based or resident on a user device. A web-based profiling application may be used to remotely contribute to the rendering of a tag cloud GUI. Furthermore, the contribution may comprise the rendering of the GUI itself (the user device handling the display) or the rendering may be generated locally on the device (profiling information describing the user profile is provided by the web-based profiling application to the user device for subsequent rendering). For a resident profiling application, the user profile as well as the tag cloud GUI are generated locally on the user device.

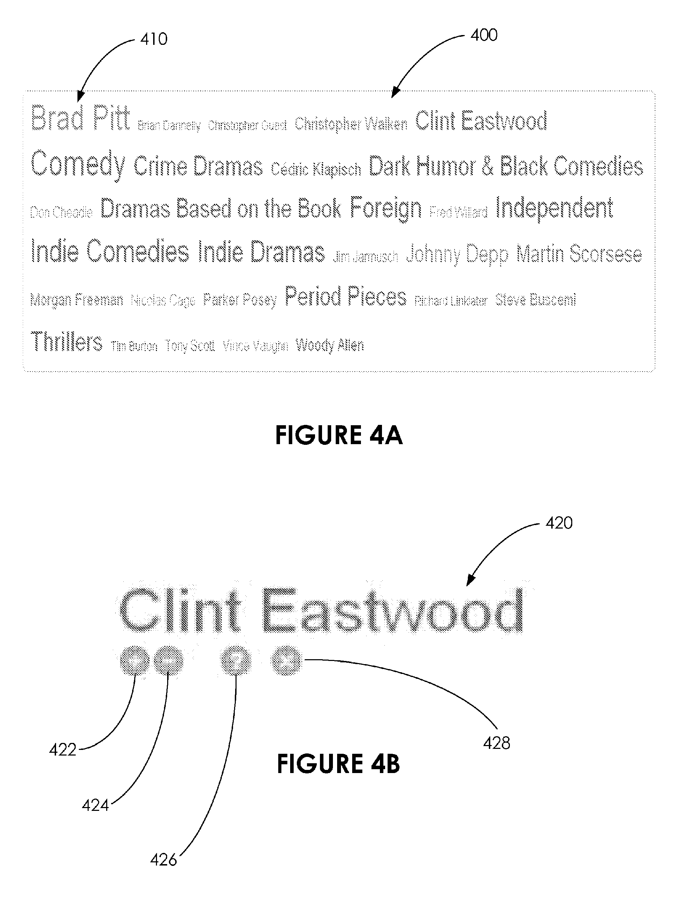

In the here after description, reference is made to tags of different sizes in a tag cloud GUI. One may understand that the size of a tag actually refers to the size of the virtual representation of the tag on the GUI. As seen in the exemplary embodiment of FIG. 4A, a user profile is presented through a tag cloud GUI comprising tags describing a user experience with movie content. In this illustration, the size of a tag is linked to its contribution, i.e. weight, in the user profile. The tag "Brad Pitt", more specifically its virtual representation 410 in the tag cloud GUI 400, is the representation that is characterized by the largest size among all tag representations. It can be seen as the tag with the highest weight, i.e. the highest contribution in the user profile displayed through the tag cloud GUI 400.

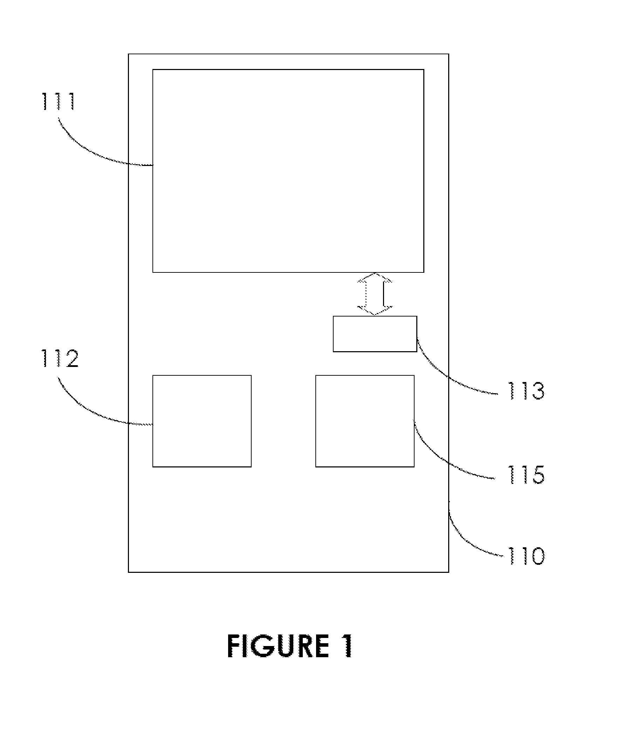

FIG. 1 is an illustration of an exemplary user device 110 used in the present system. The user device 110 comprises a display device 111, a processor 112, a controller 113 of the display device and an input device 115. User device 110 may be for instance a desktop or laptop computer, a mobile device, a PDA (personal digital assistant), etc.

In the present system, the user interaction with and manipulation of the tag cloud rendered on a GUI is achieved using the display device 11 operationally coupled to the processor 112 controlling the displayed interface. Processor 112 may control the rendering and/or the display of the GUI on the display device 111 depending on the type of profiling application, i.e. resident or web-based. Processor 112 may also handle the user entries according to the present method. The user entries to interact with the tag cloud interface may be providing through difference input means.

For instance, the display device 111 may be a touch panel 111 acting as an input device allowing interactions with a finger of a user or other devices such as a stylus. Such an input device can, for example, be used to make selections and provide inputs with respect to the GUI displayed on panel 111. This input device can also be used to issue commands in the computer system of the user device 110. The input received from a user's touch is sent to the processor 112. The touch panel is configured to detect and report the (location of the) touches to the processor 112 and the processor 112 can interpret the touches in accordance with its programming and the currently displayed GUI. For example, the processor can initiate a task in accordance with a particular touch. The controller 113, i.e. a dedicated processor, can be used to process touches locally and reduce demand for the main processor 112 of the computer system. The touch panel 111 can be based on sensing technologies including but not limited to capacitive sensing, resistive sensing, surface acoustic wave sensing, pressure sensing, optical sensing, and/or the like. Furthermore, the touch sensing means can be based on single point sensing or multipoint sensing. Single point sensing can be capable of only distinguishing a single touch, while multipoint sensing can be capable of distinguishing multiple touches that occur at the same time and/or that occur in sequence.

Alternatively, a distinct input device 115 such as a mouse, a keyboard, a keypad, a trackball and the likes, may also be used to capture the user inputs that are subsequently sent to processor 112 for further handling according to the present method.

For web-based profiling applications, as illustrated here after, the entries from a user interacting with the display panel 111 may be processed and interpreted by processor 112 and sent over a communication network to a distant server (referred to as the profiling server or platform here after) hosting the profiling application. The user device is thus equipped to communicate with the remote profiling server over a wireline and/or wireless communication network. For a resident profiling application, the entries from the user, the updated user profile as well as the tag cloud GUI may be handled locally on the user device.

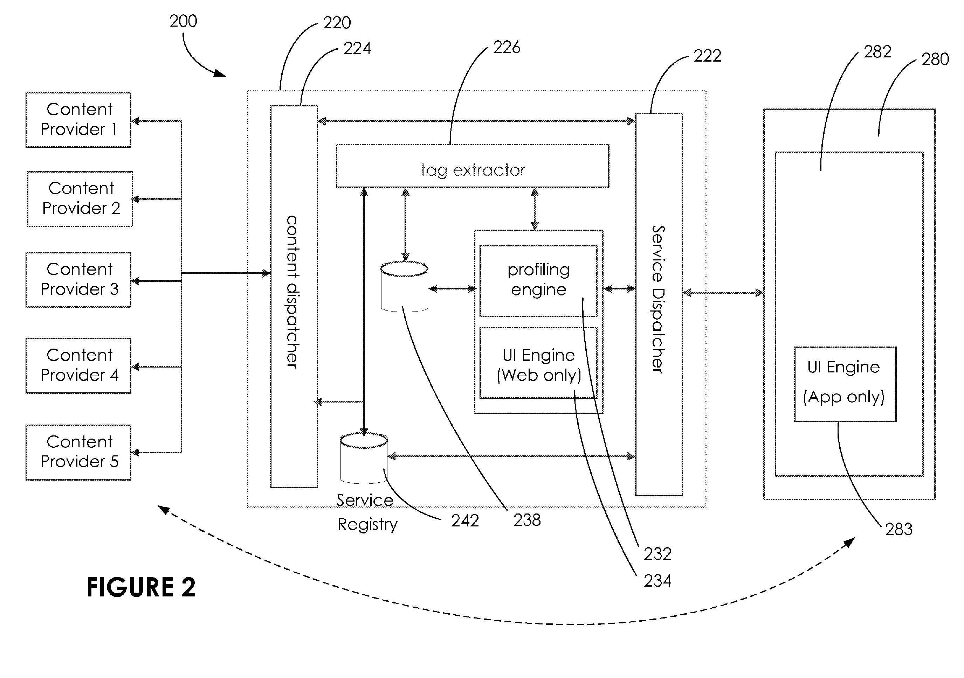

FIG. 2 shows an exemplary embodiment of a system 200 in accordance with the present system and implementing a web based profiling application. The system 200 includes a user device 280 attached to a given user A, a profiling server 220 that hosts a profiling application and receives requests from the user device 220 for generating user profiling information for user A. The user profiling information may be derived by the profiling server 220 from the user A experience over a plurality of content providers the user A has access to. The user device 280 includes a display device 282 displaying (for instance through a web browser) the GUIs rendered by the user interface (UI) engine 234 handling the user profiling information. Alternatively the user device 280 may also include itself a UI engine 283 for example in a form of a client application present on the user device. The UI engine 283 may include a local profiling application as well as a portion for interacting with the profiling server 220. Such a local profiling application is compatible with the profiling application of the profiling server 220, i.e. the local profiling application is arranged to render a tag cloud GUI based on the profiling information provided by the profiling server 220 to the user device 280.

The profiling server 220 includes a service dispatcher 222, a content dispatcher 224, a tag extractor 226, a user interface (UI) engine 234, a profiling engine 232, a service registry 242, and a device/user profile dataset 238.

The service dispatcher 222 is operably coupled to and provided for interfacing with the user device 280. The content dispatcher 224 is operably coupled to and provided for interacting with the plurality of content providers the user A may have access to (over the internet for instance as illustrated in the dotted line in FIG. 2). Content dispatcher 224 thus has access to the user experience with these content providers. Content dispatcher 224 may rely upon service registry 242 storing the user A access information to the content providers. The tag extractor 226 is operably coupled to and provided for extracting tags from the user experience as collected by the content dispatcher 224.

Through the exemplary embodiment of the system 200, the web-based profiling application may allow to:
- contribute to the rendering of the user profile derived from the user experience, in the form of a tag cloud interface to be displayed on the user device 280, the tags being displayed with different sizes corresponding to their popularity or contribution in the user profile,
- update the user profile based on the user inputs for changing the size of one or more tags, as the size of a tag in the tag cloud GUI is linked to its popularity in the user profile.

The profiling engine 232 of the present system is arranged to:
- generate a first user profile for user A, using the tags provided by tag extractor 226. In the user profile, tags may be associated to weights that are directly linked to the tag popularity in the user experience,
- provide user profiling information to the UI engine 234 (or UI engine 283 of the user device 280 depending on the implementation) for rendering the tag cloud interface. The user profiling information may comprise the list of tags and their associated weight, i.e. contribution, in the user profile,
- receives the captured user inputs, notably the selection of a tag on the tag cloud interface as well as the entries for changing the size of the selected tag, entries resulting from the user interactions with the GUI displayed on display device 282,
- update the user profile by changing the selected tag weight based on the user entries for changing the size,
- provide the updated user profiling information to the UI engine for subsequent rendering of the updated tag cloud interface.

Depending on the UI engine location, either the UI engine 283 on the user device or a UI engine 234 of the profiling server carries out the rendering of GUIs of the present system. Either UI engine will use the profiling information provided by the profiling engine 232, as well as the user entries for changing a tag size, to render an update of the GUI corresponding to the updated profile as seen by the user.

The UI engine of the present system is:
- arranged to associate a size to the virtual representation of a tag, based on its weight in the user profile,
- may rely upon user preferences for user A (as provided by user A upon registration for instance) and user device settings (e.g. provided by the device itself), stored in the device/user profile dataset 238, to customize the tag cloud GUI. This may for instance be formatting and display information for rendering the tag cloud GUI on the display device of the user device.

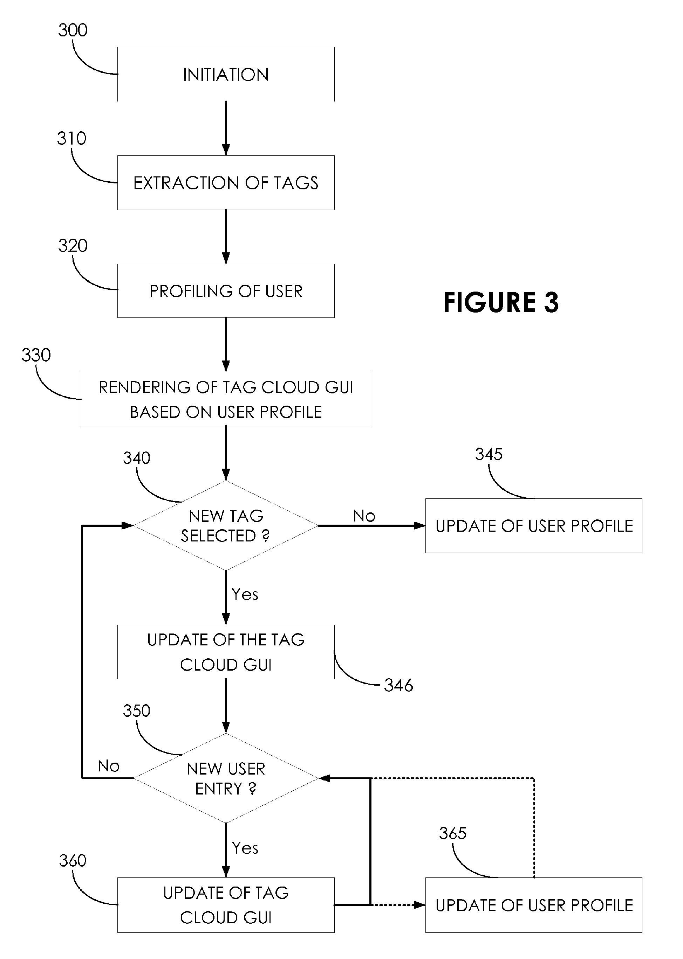

FIG. 3 is an illustrative process flow diagram of an embodiment of the present method. FIG. 3 will be described here after in conjunction with FIGs. 4A and 4B showing different GUIs displayed on the display device 282. In the hereafter description in relation to FIGs. 3 and 4, reference will be made to a web-based profiling application, comprising a UI engine 234. The exemplary embodiments wherein the UI engine 283 is comprised in the user device, or the device only application, will be described later on. Furthermore, the tag cloud GUI rendered on the server side will be illustrated as a web page shown in a web browser running on the user device. This is in no way limiting as other implementation such as a web application, a widget, etc., may be used to display the tag cloud GUI on the user device display.

Furthermore, acts 300 to 320 illustrate an exemplary embodiment of generating a user profile, presently through the knowledge of the user internet experience with a number of content sources. Other examples may be used to generate a user profile, such as a profile defined by the user himself, or a combination of user experience and user defined profile. Furthermore, a user profile may be generated from the user experience with one or more application software. Any known methods are readily available to the man skilled in the art to generate the user profile used in the present system, provided it can be characterized through a number of tags of different weights, as illustrated here after.

In a preliminary act 300, a user A may register with a profiling server hosting the profiling application. Indeed the present method may be offered for instance through a web based application available as a service upon registration. While registering, the user A may list one or more content providers he is routinely consuming content from. The content provider may be for instance Facebook™ or Netflix™. The user may further provide his login information to these content providers. Both the content providers and login information may be stored in the service registry 242.

Content providers generally keep track of users behavior as well as the consumed content. Such raw data may be available to any service platform, such as the present profiling platform, through API (application user interface). For instance, OAuth (http://oauth.net/) is an open protocol to allow secure API authorization to publish and interact with users data between content providers such as Facebook™ and/or Netflix™ and a web application, such as the present profiling platform.

Using the user A information stored in the service registry 242, the content dispatcher will retrieve, for instance thanks to the hereabove described APIs, the user A raw data from the content providers. These raw data, corresponding to the user A experience, may subsequently be parsed in a further act 310 by the tag extractor 226 to extract any relevant tags. The extracted tags characterize the user A experience with these content providers. The tags may correspond for instance to words taken out of the content itself or the metadata associated to consumed content (such as media files for instance).

In a further act 320, the profiling engine 232, using the tags extracted by the tag extractor 226, will generate the user A profile. The profiling engine 232 may for instance measure each tag popularity, i.e. occurrences among the extracted tags. These numbers of occurrences can be seen as weights, which can be normalized so that the total weight for all the tags is equal to 1. Another possibility is to give a weight of 1 to the most popular tag, and express the weight of other tags as a factor of this tag's weight. The user profile may be defined using an APML (Attention Profiling Markup Language) format. An APML file is an XML (Extensible Markup Language) file that contains a description of the user's rated interests, in a portable and sharable format. Presently the APML file for a user profile will comprise a series of tags associated to their respective weights.

Once the user profile is generated, the profiling engine 232 will pass profiling information to the UI engine. In a subsequent act 330, the UI engine will render a GUI of the user profile through a tag cloud as illustrated in FIG. 4A, using the provided profiling information. The profiling information corresponds to a description of the user profile in a format understandable by the UI engine. This may for instance be the APML file mentioned here above. In this tag cloud GUI, the size of the virtual representation of a tag is directly linked to the tag contribution, i.e. weight, in the user profile. The tag size may for instance be proportional to the tag weight or more generally linked through a reversible function, as any input from the user to change the size of a tag will correspond to a change of its weight in the user profile.

UI engine 234 may further use user preferences, and if any user device settings, from the device/user profile dataset 238 to customize the tag cloud GUI 400. For instance, the tags may be associated to categories that are displayed in different colors. The font of the tags may also vary depending on the user preferences.

In an additional exemplary embodiment of the present system, tags whose weights are negligible may be discarded so as to not overload the tag cloud GUI. The selection of the tags added to the tag cloud may for instance depend upon a threshold weight, a minimum number of tags to be displayed, etc. Available selection techniques known for tag clouds are readily available to the man skilled in the art for selecting relevant tags describing the user profile.

In order for the user to point to a specific tag, the virtual representations of the tags may be selectable in the tag cloud GUI. More generally, the tag cloud GUI is interactive, i.e. the user can interact directly with the different tags, and provide entries for changing the tag sizes. This may be achieved for instance through existing web development techniques such as Java, AJAX, Microsoft .NET, or the likes, to provide realtime control over the tag cloud, thus eliminating the need to refresh a traditional HTML based web page. Such implementations, notably AJAX (Asynchronous JavaScript and XML), allows functions such as a "drag and drop", "select" , etc., to run in part of the GUI, with limited update. As there is no longer the need to download a whole web page for the GUI, the navigation and interaction are made more user friendly. The user has an increased sense of interaction with the web page.

AJAX for example allows separation between the data information to deliver to the user, the format or structure of the webpage, the style elements of the webpage (fonts, picture, text layout, etc.) and, the functionality (i.e. the applications) of the web page.

A tag may be selectable through a click of a mouse or the touch of a finger (on a touch panel). A tag may also be selected through simply positioning the cursor of the mouse on the virtual representation of the tag itself.

Provided a tag is selected, (answer Yes to act 340), an update of the tag cloud GUI is generated by the UI engine in a further act 346. To do so, the selected tag is sent over a communication network by the user device processor to the UI engine 234 of the profiling server. Once generated, the GUI update is sent back to the user device. This GUI update enables the user to control the selected tag size. Such web development techniques like AJAX allow an update limited to the tag virtual representation itself as illustrated in FIG. 4B. The control from the user may be provided to the tag cloud GUI through a first entry for changing the size of the selected virtual representation. Different solutions are readily available to the man skilled in the art to enable the user entry. For instance, a control box may be generated in the update of act 346, allowing the user to provide a numerical value for the new size of the selected tag.

In an exemplary embodiment of the tag cloud GUI of the present system, as seen in FIG. 4B, the update of act 346 will comprise, for the selected tag 420, namely "Client Eastwood", a plurality of control buttons 422, 424, 426 and 428:
- a control button 426 may be provided to give the user, when activated, more information about the tag, like for instance exerts from the content that generated this specific tag,
- a suppress button 428 may be provided to allow the user to simply remove the corresponding tag from the profile,
- size buttons, illustratively shown as an "increase the size" button 422 and a "reduce the size" button 424, so that the user can have a direct visual control over the size of a tag, as described here after.

Provided a user entry for changing the size of the selected tag is captured (answer Yes to act 350), the tag cloud GUI may be updated in an option act 360 to visually implement the user control. For instance, if the user entry is provided through a control box, the UI engine will use the numerical value to adjust the selected tag size. Using the size buttons, any selection of either button 422 or 424 may result respectively in a slight increase or decrease of the selected tag size. Each on of these two buttons may be associated to an increment in tag size that the UI engine will use to adjust the tag size to the size desired by the user. As may be readily appreciated, other indications and corresponding actions may be provided by one or more of the buttons 422, 424. For example the cloud GUI may provide for an indication to increase the size by a percentage of a current size of the tag and/or a reduce the size by a percentage of a current size of the tag, etc.

By updating the GUI for each entry of the user (loop of act 350 and 360 as in FIG. 3 provided the answer is Yes to act 350), the user will get a direct sense of the contribution of the selected tag into his profile.

When no more entry are provided by the user for the selected tag (answer No to act 350), other tags may be selected (Yes again to act 340) to carry out the same acts 346 to 360 to allow the user to change other tags' contribution to his user profile.

The weights of the one or more selected tags in the user profile are subsequently updated based on the user entries either in act 345 or in act 360. As the size of a tag in the tag cloud GUI is linked through a reversible function to its weight in the user profile, any change of a tag size will allow the calculation of a corresponding weight through this reversible function. The data passed from the UI engine to the profiling engine may be the user entries or alternatively the tags new sizes. The user profile weights may be recalculated either:
- in act 365, each time the tag cloud GUI is updated, following a user entry for changing the size of a selected tag, and/or,
- in act 345, when no more tags are selected, so as to have a one time update of the weights.

In an alternative exemplary embodiment of the present system, the update of the user profile may be carried out before the update of the tag cloud GUI, upon receipt of the user entry. The user entries may be either received by one of the UI engine or profile engine first, and passed on to the other subsequently. The update of the user profile may comprise in an additional exemplary embodiment of the present system the normalization of the weights mentioned earlier on. For instance, the APML file for the user profile may be updated with the new weights. As the most popular tag may have changed, the weights may be recalculated as a factor of the newly most popular tag.

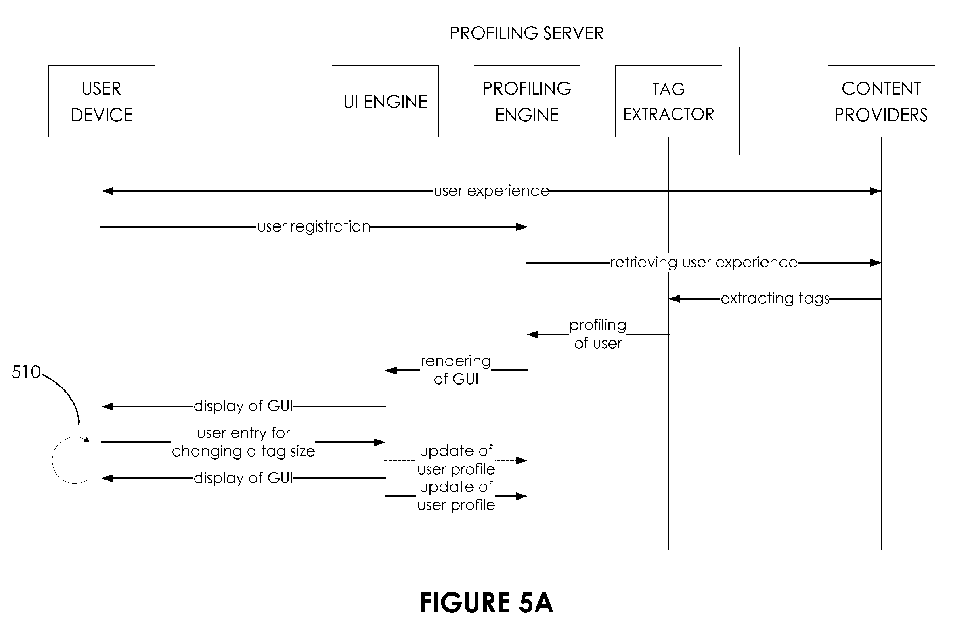

FIG. 5A shows an illustrative process flow diagram in accordance with another embodiment of the present system. This illustration corresponds to a web-based profiling server hosting the UI engine 234, as in FIG. 2. The different devices mentioned so far, namely the user device, the UI engine, the profiling engine, the tag extractor as well as the content providers, are illustrated. The user will built up a user experience through a plurality of accesses, over a communication network, with the content providers. Once the user has registered with the profiling server (the registration is for instance illustrated as being handled by the profiling engine in the profiling server), the profiling engine will retrieve from the content providers the user experience, through the user information stored in the service registry, and the content dispatchers. The user experience will be analyzed by the tag extractor for extracting a plurality of tags characterizing the user. These tags will allow the profiling engine to generate the user profile. Using the profiling information generated by the profiling engine, the UI engine will then generate an initial tag cloud GUI of the user, for further display on the user device.

The user entries are then monitored, and for each entry, the tag cloud GUI is updated by the UI engine. The user entries as well as the GUI updates are exchanged between the user device and the profiling server over the communication network. As mentioned earlier, the user profile may be updated for each entry from the user (i.e. during the loop 510 of exchanges between the user device and the UI engine) or once no more user entry is captured (after the loop 510).

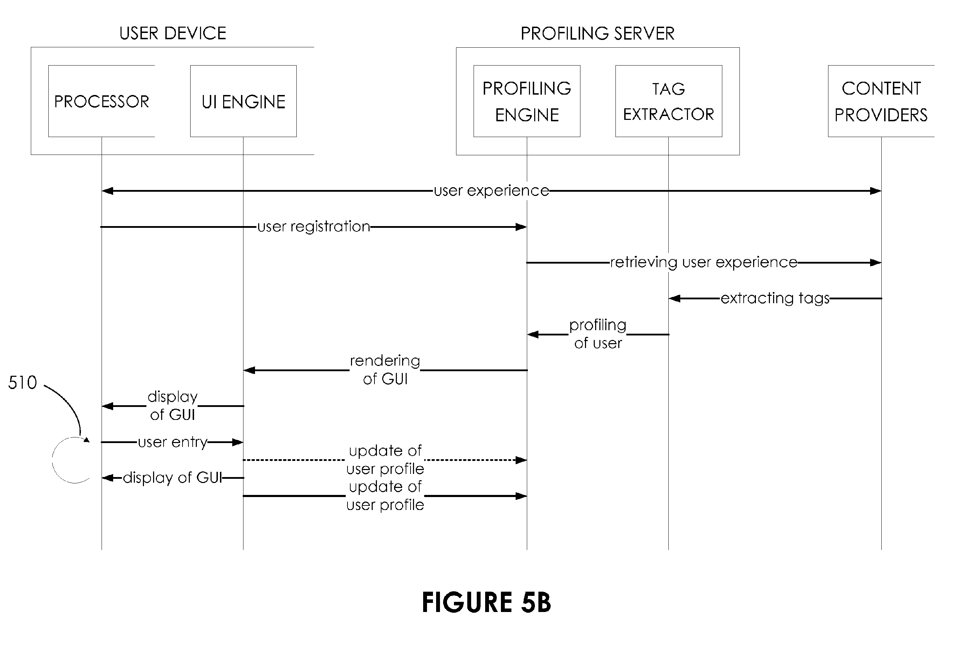

FIG. 5B shows another illustrative process flow diagram in accordance with another embodiment of the present system. This illustration corresponds to the web-based profiling server hosting the profiling engine, while the UI engine 283 is hosted by the user device, as seen from FIG. 2.

Once the user profile is generated, as illustrated in relation to FIG. 5A, the corresponding profiling information will be sent over the communication network to the UI engine hosted by the user device. All GUI updates mentioned before will be carried out locally on the user device through interactions between the user device processor handling the user entries and the local UI engine 283. The user entries for changing tag sizes, or alternatively the new tag sizes will be sent over the communication network to the profiling engine for a subsequent update of the user profile.

The present teachings are applicable to the alternative embodiment wherein the profiling application is resident on the user device. No communication network is required, as one or more of the tag extractor, the profiling engine and the UI engine including each of the tag extractor, the profiling engine and the UI engine may be hosted locally on the user device.

In the here above description, engine and extractor parts when hosted on one profiling server are illustrated as different entities on the same system. One may note this illustrations as comprising several parts is in no way limiting as these parts could be hosted by the same node or server, or being operatively linked to each other. The presentation using different parts helps to illustrate the different tasks performed by the profiling server in the present system.

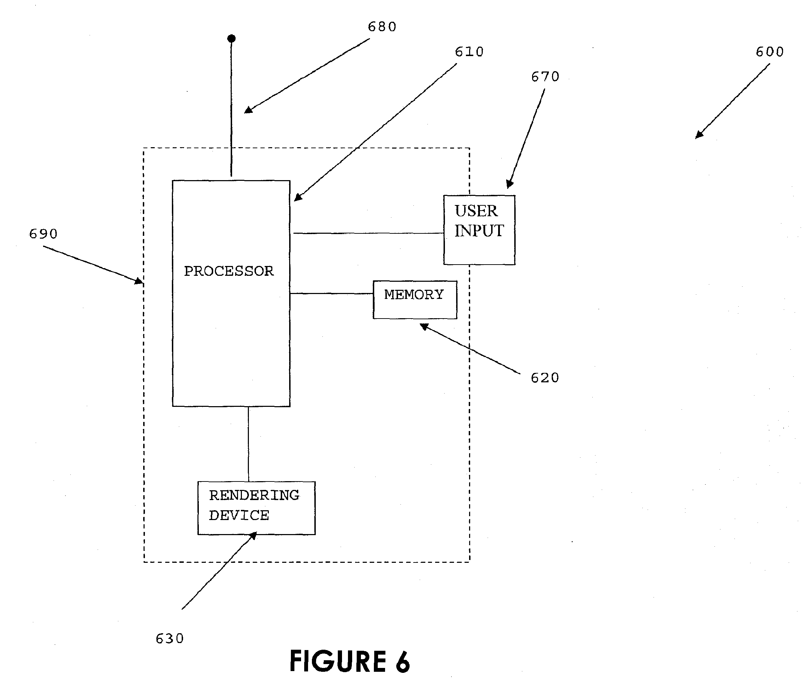

FIG. 6 shows a system 600 in accordance with an embodiment of the present system. The system 600 includes an electronic device 690 (e.g., user device, profiling server, etc.) that has a processor 610 operationally coupled to a memory 620, a rendering device 630, such as one or more of a display, speaker, etc., a user input device 670 and a connection 680 operationally coupled to the user device 690. The connection 680 may be an operable connection between the device 690, as a user device, and another device that has similar elements as the device 690, such as a profiling server. The connection 680 may also be an operable connection between the device 690, as a profiling server, and one or more content providers.

The memory 620 may be any type of device for storing application data as well as other data, such as user profiles, user preferences, etc. The application data and other data are received by the processor 610 for configuring the processor 610 to perform operation acts in accordance with the present system. The operation acts include controlling at least one of the rendering device 630 to render a GUI (e.g., GUI 400). The user input 670 may include a keyboard, mouse, trackball or other devices, including touch sensitive displays, which may be stand alone or be a part of a system, such as part of a personal computer (e.g., desktop computer, laptop computer, etc.) personal digital assistant, mobile phone, converged device, or other rendering device for communicating with the processor 610 via any type of link, such as a wired or wireless link. The user input device 670 is operable for interacting with the processor 610 including interaction within a paradigm of a GUI and/or other elements of the present system, such as to enable web browsing, content/service selection, such as provided by left and right clicking on an indication of content/services, user entries for changing a tag size, etc. such as provided by user interaction with a computer mouse, etc., as may be readily appreciated by a person of ordinary skill in the art.

In accordance with an embodiment of the present system, the rendering device 630 may operate as a touch sensitive display for communicating with the processors 610 (e.g., providing selection of the profiling service, user entries for changing a tag size, etc.) and thereby, the rendering device 630 may also operate as a user input device. In this way, a user may interact with the processor 610 including interaction within a paradigm of a GUI, such as to operation of the present system, device and method. Clearly the user device 690, the processor 610, memory 620, rendering device 630 and/or user input device 670 may all or partly be portions of a computer system or other device, and/or be embedded in a portable device, such as a mobile telephone, personal computer (PC), personal digital assistant (PDA), converged device such as a smart telephone, etc.

The system, device and method described herein address problems in prior art systems. In accordance with an embodiment of the present system, the device 690, corresponding user interfaces and other portions of the system 600 are provided for interacting between a user device and a profiling server and between the profiling server and one or more content providers in accordance with the present system.

The methods of the present system are particularly suited to be carried out by a computer software program, such program containing modules corresponding to one or more of the individual steps or acts described and/or envisioned by the present system, such as a generating the user profile, rendering the tag cloud GUI, etc. Such program may of course be embodied in a computer-readable medium, such as an integrated chip, a peripheral device or memory, such as the memory 620 or other memory coupled to the processor 610.

The computer-readable medium and/or memory 620 may be any recordable medium (e.g., RAM, ROM, removable memory, CD-ROM, hard drives, DVD, floppy disks or memory cards) or may be a transmission medium utilizing one or more of radio frequency (RF) coupling, Bluetooth coupling, infrared coupling, etc. Any medium known or developed that can store and/or transmit information suitable for use with a computer system may be used as the computer-readable medium and/or memory 620.

Additional memories may also be used. These memories configure processor 610 to implement the methods, operational acts, and functions disclosed herein. The operation acts may include controlling the rendering device 630 to render elements in a form of a GUI and/or controlling the rendering device 630 to render other information in accordance with the present system.

Moreover, the term "memory" should be construed broadly enough to encompass any information able to be read from or written to an address in the addressable space accessed by a processor. With this definition, information on a network is still within memory 620, for instance, because the processor 610 may retrieve the information from the network for operation in accordance with the present system. For example, a portion of the memory as understood herein may reside as a portion of the content providers, profiling server, and/or the user device.

The processor 610 is capable of providing control signals and/or performing operations in response to input signals from the user input device 670 and executing instructions stored in the memory 620. The processor 610 may be an application-specific or general-use integrated circuit(s). Further, the processor 610 may be a dedicated processor for performing in accordance with the present system or may be a general-purpose processor wherein only one of many functions operates for performing in accordance with the present system. The processor 610 may operate utilizing a program portion, multiple program segments, or may be a hardware device utilizing a dedicated or multi-purpose integrated circuit.

Finally, the above discussion is intended to be merely illustrative of the present system and should not be construed as limiting the appended claims to any particular embodiment or group of embodiments. Thus, while the present system has been described with reference to exemplary embodiments, including user interfaces, it should also be appreciated that numerous modifications and alternative embodiments may be devised by those having ordinary skill in the art without departing from the broader and intended spirit and scope of the present system as set forth in the claims that follow. Further, while exemplary user interfaces are provided to facilitate an understanding of the present system, other user interfaces may be provided and/or elements of one user interface may be combined with another of the user interfaces in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements ;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A method for updating a user profile characterizing a user experience with at least one application software, the user profile being described through a plurality of tags of different weights based on the popularity of the tag in said user experience, said method comprising the acts of:
rendering a Graphical User Interface (GUI) of the user profile through a tag cloud using a virtual representation for each tag, the size of each virtual representation being linked to the corresponding weight of the tag,
receiving at least a first entry for changing the size of one selected virtual representation,
updating in the user profile the weight of the tag corresponding to the selected virtual representation based on the first entry.

2. The method of claim 1, further comprising, after the act of receiving a first entry for changing the size, an act of rendering an update of the GUI of the user profile comprising an updated size for the selected virtual representation corresponding to said first entry.

3. The method of claim 2, further comprising, prior to the act of receiving a first entry for changing the size, the acts of:
- receiving a selection of a virtual representation of a tag,
- rendering an update of the GUI of the user profile comprising at least one control button for changing the size of the selected virtual representation,
wherein the act of receiving a first entry comprising the act of receiving a selection of the control button.

4. A computer program stored on a computer readable memory medium, the computer program being configured for generating updating a user profile characterizing a user experience with at least one application software, the user profile being described through a plurality of tags of different weights based on the popularity of the tag in said user experience, the computer program comprising:
a program portion configured to render a Graphical User Interface (GUI) of the user profile through a tag cloud using a virtual representation for each tag, the size of each virtual representation being linked to the corresponding weight of the tag,
a program portion configured to receive at least a first entry for changing the size of one selected virtual representation,
a program portion configured to update in the user profile the weight of the tag corresponding to the selected virtual representation based on the first entry.

5. An electronic device for updating a user profile characterizing a user experience with at least one application software, the user profile being described through a plurality of tags of different weights based on the popularity of the tag in said user experience, said electronic device being configured to:
render a Graphical User Interface (GUI) of the user profile through a tag cloud using a virtual representation for each tag, the size of each virtual representation being linked to the corresponding weight of the tag,
receive at least a first entry for changing the size of one selected virtual representation,
update in the user profile the weight of the tag corresponding to the selected virtual representation based on the first entry.

6. The electronic device of claim 5, said user device being further arranged, after receiving a first entry for changing the size, to render an update of the GUI of the user profile comprising an updated size for the selected virtual representation corresponding to said first entry.

7. A profiling application stored on a computer readable memory medium for updating a user profile characterizing a user experience with at least one application software, the user profile being described through a plurality of tags of different weights based on the popularity of the tag in said user experience, said profiling application comprising:
a portion configured to render a Graphical User Interface (GUI) of the user profile through a tag cloud using a virtual representation for each tag, the size of each virtual representation being linked to the corresponding weight of the tag,
a portion configured to receive at least a first entry for changing the size of one selected virtual representation,
a portion configured to update in the user profile the weight of the tag corresponding to the selected virtual representation based on the first entry.

8. The profiling application of claim 7, said profiling application further comprising a portion to render an update of the GUI of the user profile comprising an updated size for the selected virtual representation corresponding to said first entry.

9. A system for updating a user profile characterizing a user experience with at least one application software, the user profile being described through a plurality of tags of different weights based on the popularity of the tag in said user experience, said system comprising:
- a profiling server configured to:
provide profiling information for rendering a Graphical User Interface (GUI) of the user profile through a tag cloud using a virtual representation for each tag, the size of each virtual representation being linked to the corresponding weight of the tag,
receive at least a first entry for changing the size of one selected virtual representation,
update in the user profile the weight of the tag corresponding to the selected virtual representation based on the first entry.
- a user device configured to:
render the GUI of the user profile using the profiling information,
capture the first user entry.

10. The system of claim 9, wherein the user device is further configured to:
render an update of the GUI of the user profile comprising an updated size for the selected virtual representation corresponding to said first entry.
